# EUROPÄISCHE PATENTSCHRIFT

(11) **EP 2 548 680 B1**
(45) Veröffentlichungstag und Bekanntmachung des Hinweises auf die Patenterteilung: **26.11.2014**
(21) Anmeldenummer: 12176558.0
(22) Anmeldetag: 16.07.2012
(51) Int. Cl.: B23B 3/30, B23B 3/16, B23Q 37/00, B23Q 1/48, B23Q 39/02, B23Q 39/04, B23Q 39/00

(54) **Drehmaschine**
Rotating machine
Machine rotative

(30) Priorität: 19.07.2011 DE 102011051950; 25.01.2012 DE 102012100614
(43) Veröffentlichungstag der Anmeldung: 23.01.2013
(73) Patentinhaber: Index-Werke GmbH & Co. KG Hahn & Tessky, 73730 Esslingen (DE)
(72) Erfinder: Baumann, Ulrich, 73252 Lenningen (DE); Forst, Heinz, 73773 Aichwald (DE)
(74) Vertreter: Hoeger, Stellrecht & Partner Patentanwälte

(56) Entgegenhaltungen:
- EP-A1- 1 897 640
- WO-A1-2008/033850
- DE-A1-102008 050 656
- US-A- 5 490 307

## Beschreibung

Die Erfindung betrifft eine Drehmaschine gemäß dem Oberbegriff des Patentanspruchs 1.

Derartige Drehmaschinen sind aus dem Stand der Technik (wie z.B. aus US 5 490 307 A, WO 2008/033850 oder DE 10 2008050656 A) bekannt.

Bei diesen besteht das Problem, dass mit diesen komplexe Bearbeitungen gar nicht oder nur sehr aufwendig durchführbar sind.

Der Erfindung liegt daher die Aufgabe zugrunde, eine Drehmaschine der gattungsgemäßen Art derart zu verbessern, dass auch komplex geformte Werkstücke möglichst einfach und kostengünstig herstellbar sind.

Diese Aufgabe wird durch eine Drehmaschine mit den Merkmalen des Anspruchs 1 gelöst.

Der Vorteil der erfindungsgemäßen Lösung ist somit darin zu sehen, dass durch die B-Achse und die H-Achse die Möglichkeit eröffnet wird, durch zwei zusätzliche, in senkrecht zueinander verlaufenden Ausrichtebenen erfolgende Drehbewegungen das in der Bearbeitungsstellung stehende Werkzeug relativ zum Werkstück optimal auszurichten.

Unter einer B-Achse ist dabei eine Achse zu verstehen, die senkrecht zu einer Ebene verläuft, welche ihrerseits parallel zu einer X-Achse und einer Z-Achse der Drehmaschine ausgerichtet ist. Insbesondere verläuft die B-Achse parallel zu einer Y-Achse.

Hinsichtlich der Ausführung der Drehung um die B-Achse wurden bislang keine näheren Angaben gemacht.

Beispielsweise könnte die Drehung um die B-Achse in diskreten Schritten erfolgen und es wäre beispielsweise denkbar, die Drehbewegung um die B-Achse durch einen Formschluss in den vielen diskreten Drehstellungen relativ zueinander zu fixieren.

Eine besonders vorteilhafte Lösung sieht jedoch vor, dass die Drehung um die B-Achse durch ein Drehpositioniersystem stufenlos und lagegeregelt erfolgt, das heißt, dass die Drehung um die B-Achse um beliebige Winkel und insbesondere auch in beliebiger, durch die Steuerung, beispielsweise durch deren NC-Programm, vorgebbarer Geschwindigkeit ausführbar ist und dass andererseits durch die Lageregelung keine Fixierung der Drehbewegung um die B-Achse mehr erfolgt, sondern die Drehstellung um die B-Achse durch einen ständig arbeitenden lagegeregelten Drehantrieb aufrecht erhalten wird, so dass dadurch auch die Möglichkeit besteht, eventuell während einer Bearbeitung auftretende Fehlorientierungen durch den lagegeregelten Drehantrieb sofort zu kompensieren, so dass sich diese nicht auswirken können.

Ergänzend zum lagegeregelten Antrieb könnte für besonders schwere Bearbeitungen noch eine reibschlüssige Fixierung, beispielsweise in Form einer Drehbremse, vorgesehen sein.

Eine besonders günstige Lösung sieht vor, dass das Drehpositioniersystem einen lagegeregelten Drehantrieb aufweist, der ein eine Übersetzung ins Langsame bewirkendes Übersetzungsgetriebe antreibt, durch welches das Revolvergehäuse drehbar ist.

Die Verwendung eines ins Langsame übersetzenden Übersetzungsgetriebes hat den Vorteil, dass damit die Möglichkeit erst eröffnet wird, über den lagegeregelten Drehantrieb die unterschiedlichen Drehstellungen des Revolvergehäuses auch bei großen Gegenkräften aufrecht zu erhalten, da das Übersetzungsgetriebe bewirkt, dass die Rückwirkung der auf den Revolverkopf wirkende Momente über das Revolvergehäuse auf eine Drehbewegung um die B-Achse einen auf den lagegeregelten Drehantrieb wirkendes, sehr viel kleineren Drehmoment ergibt, dem der lagegeregelte Drehantrieb bei allen Dreharbeiten aufgrund des von diesem erzeugbaren Drehmoments entgegenwirken kann, so dass keinerlei zusätzliche Fixiereinrichtung zur Fixierung der Drehbewegung um die B-Achse erforderlich ist, welche die Genauigkeit der Drehpositionierung um die B-Achse beeinträchtigen könnte.

Ein derartiges Übersetzungsgetriebe kann in unterschiedlichster Art und Weise ausgebildet sein.

Hinsichtlich der Lagerung des Revolvergehäuses am Revolverbewegungssystem wurden bislang keine näheren Angaben gemacht.

So könnte für die Drehbewegung eine separate Lagerung vorgesehen sein.

Eine besonders vorteilhafte Lösung sieht vor, dass das Übersetzungsgetriebe das Revolvergehäuse am Revolverbewegungssystem drehbar lagert, so dass das Übersetzungsgetriebe gleichzeitig die Lagerung für das Revolvergehäuse am Revolverbewegungssystem darstellt.

Hinsichtlich der Ausrichtung der Revolverachse relativ zur B-Achse wurden bislang keine näheren Angaben gemacht.

So könnte beispielsweise die Revolverachse parallel zur B-Achse ausgerichtet sein.

Eine besonders günstige Lösung sieht vor, dass die Revolverachse in einer senkrecht zur B-Achse verlaufenden Ebene liegt.

Eine derartige Konstellation ist besonders günstig im Hinblick auf die Möglichkeit, die Werkzeuge relativ zum Werkstück optimal auszunutzen.

Hinsichtlich des Antriebs des Revolverkopfes um die Revolverachse relativ zum Revolvergehäuse wurden bislang keine näheren Angaben gemacht.

So sieht eine vorteilhafte Lösung vor, dass der Revolverkopf durch ein Revolverdrehpositioniersystem stufenlos und lagegeregelt relativ zum Revolvergehäuse um die H-Achse antreibbar und positionierbar ist.

Hinsichtlich des Revolverpositioniersystems wurden ebenfalls bislang keine näheren Angaben gemacht.

So sieht eine vorteilhafte Lösung vor, dass das Revolverpositioniersystem einen Drehantrieb aufweist, der ein eine Übersetzung ins Langsame bewirkendes Übersetzungsgetriebe antreibt, durch welches der Revolverkopf um die Revolverachse drehbar ist.

Bislang wurden ferner keine näheren Angaben über die Lagerung des Revolverkopfes am Revolvergehäuse gemacht.

Beispielsweise wäre es denkbar, eine separate Lagerung für den Revolverkopf am Revolvergehäuse vorzusehen, die unabhängig vom Übersetzungsgetriebe ist.

Eine besonders zweckmäßige Lösung sieht vor, dass das Übersetzungsgetriebe den Revolverkopf am Revolvergehäuse drehbar lagert.

Hinsichtlich der Ausbildung der vorstehend erwähnten Übersetzungsgetriebe wurden bislang ebenfalls keine näheren Angaben gemacht. Die Übersetzungsgetriebe könnten klassische Rädergetriebe oder auch Planetengetriebe sein.

Beispielsweise kommt als Übersetzungsgetriebe ins Langsame, ein Kurvengetriebe, beispielsweise ein sogenanntes Zyklo-Getriebe oder Zykloidgetriebe, zum Einsatz.

Alternativ dazu ist es aber auch denkbar, anstelle eines Zyklo-Getriebes einen sogenannten "harmonic drive" einzusetzen.

Alle diese Getriebe haben neben einer großen Übersetzung ins Langsame den Vorteil, dass sie in hohem Maße lastspitzenabsorbierend ausgebildet sind und eine hohe Steifigkeit aufweisen. Außerdem haben diese Getriebe den Vorteil, dass sie sehr spielarm sind.

Hinsichtlich des Verlaufs der als H-Achse ausgebildeten Revolverachse im Raum relativ zur B-Achse wurden bislang keinerlei Angaben gemacht.

Prinzipiell wäre es denkbar, die Revolverachse so auszurichten, dass diese radial zur B-Achse verläuft.

Aus Gründen eines möglichst kompakten räumlichen Aufbaus hat es sich jedoch als vorteilhaft erwiesen, wenn die Revolverachse in einem Abstand von der B-Achse verläuft.

Um die Möglichkeiten der erfindungsgemäßen Lösung optimal ausnutzen zu können, ist vorzugsweise vorgesehen, dass ein Bewegungsraum für die Relativbewegung zwischen einem in Arbeitsstellung stehenden Werkzeug und der Werkstückaufnahme so gewählt ist, dass das Werkzeug durch Drehung um die B-Achse und die H-Achse in eine Stellung bringbar ist, in welcher diese mit der Werkstückspindelachse in allen durch diese hindurchverlaufenden Ebenen einen spitzen Winkel einschließen kann.

Eine derartige Möglichkeit der Ausrichtung des Werkzeugs erlaubt einerseits eine hohe Flexibilität bei der Bearbeitung des Werkstücks insbesondere bei komplexen Formen desselben.

Besonders günstig ist es dabei ferner, wenn der Bewegungsraum für die Relativbewegung zwischen einem in Arbeitsstellung stehenden Werkzeug und der Werkstückaufnahme so gewählt ist, dass das Werkzeug durch Drehung um die B-Achse und um die H-Achse exakt parallel zur Werkstückspindelachse ausrichtbar ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine perspektivische Darstellung eines Ausführungsbeispiels einer erfindungsgemäßen Drehmaschine;
- Fig. 2: eine schematische Darstellung einer Ausrichtung eines in Arbeitsstellung stehenden Werkzeugs relativ zu einer Werkstückspindelachse in einem spitzen Winkel;
- Fig. 3: eine schematische Darstellung einer Ausrichtung eines in Arbeitsstellung stehenden Werkzeugs parallel zur Werkstückspindelachse;
- Fig. 4: eine Schnittansicht längs Linie E2 in Fig. 3;
- Fig. 5: eine schematische Darstellung ähnlich Fig. 2 einer Ausrichtung eines Werkzeugs in einem spitzen Winkel zu einer zweiten Werkstückspindelachse der Gegenspindel;
- Fig. 6: einen Schnitt durch den Werkzeugrevolver und ein Drehpositioniersystem für den Werkzeugrevolver und
- Fig. 7: einen Schnitt längs Linie E1 in Fig. 6.

Ein Ausführungsbeispiel einer als Ganzes mit 10 bezeichneten Drehmaschine, in diesem Fall beispielsweise einer Langdrehmaschine, umfasst ein als Ganzes mit 12 bezeichnetes Maschinengestell, an welchem eine erste Werkstückspindel 14 gehalten ist, mit welcher ein Werkstück W, in diesem Fall eine Werkstoffstange, um eine erste Werkstückspindelachse 16 rotierend antreibbar und gegen Bewegungen in Richtung der Werkstückspindelachse 16 fixierbar ist.

Die erste Werkstückspindel 14 ist bei dem dargestellten Ausführungsbeispiel in einer zur ersten Werkstückspindelachse 16 parallelen Z-Richtung verschiebbar am Maschinengestell 12 gelagert, wobei hierzu am Maschinengestell 12 ein Längsführungssystem 20 vorgesehen ist, mit welchem ein die Werkstückspindel 14 drehbar aufnehmendes Werkstückspindelgehäuse 22 in der Z-Richtung verschiebbar geführt ist.

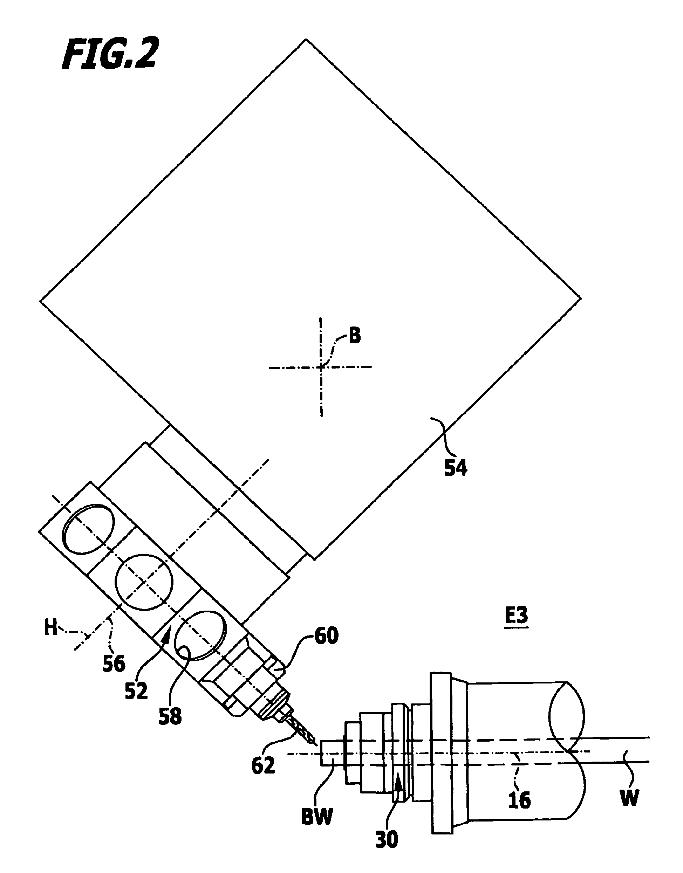

Da das dargestellte Ausführungsbeispiel der erfindungsgemäßen Drehmaschine eine Langdrehmaschine ist, ist an dem Maschinengestell 12 außerdem noch stationär eine Langdrehführungsbüchse 30 gehalten, welche als Werkstückaufnahme dient und insbesondere dazu dient, das als Werkstoffstange ausgebildete Werkstück W nahe eines Bearbeitungsbereichs BW radial zur ersten Werkstückspindelachse 16 zu führen (Fig. 2 bis 4), wobei ein Vorschub des Werkstücks W relativ zur Langdrehführungsbüchse 30 durch Verschieben der ersten Werkstückspindel 14 in der Z-Richtung relativ zum Maschinengestell 12 erfolgt.

Somit ist der über die Langdrehführungsbüchse 30 auf einer der ersten Werkstückspindel 14 gegenüberliegenden Seite überstehende Bearbeitungsbereich BW des Werkstücks W durch Werkzeuge bearbeitbar, wobei die quer zur ersten Werkstückspindelachse 16 wirkenden Kräfte durch die Langdrehführungsbüchse 30 aufgenommen werden, während der Bearbeitungsbereich BW des Werkstücks W längs des Werkstücks W wandert, in dem Maße, in dem ein Vorschub des Werkstücks W relativ zur Langdrehführungsbüchse 30 aufgrund einer Verschiebung der ersten Werkstückspindel 14 in Z-Richtung erfolgt.

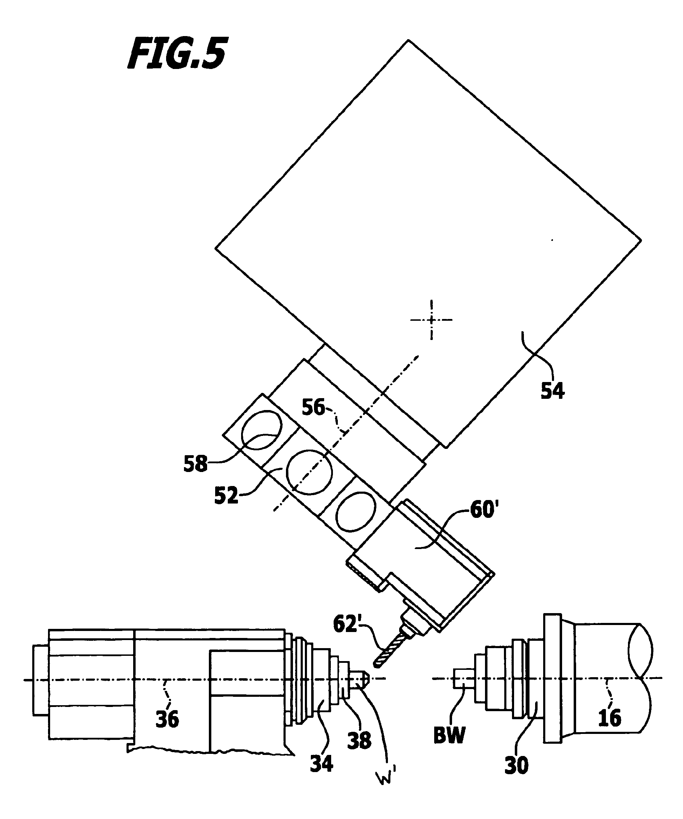

Außerdem ist auf einer der ersten Werkstückspindel 14 abgewandten Seite der Langdrehführungsbüchse 30 noch eine als Ganzes mit 34 bezeichnete zweite Werkstückspindel oder Gegenspindel vorgesehen, die ihrerseits um eine zweite Werkstückspindelachse 36 drehbar in einem zweiten Werkstückspindelgehäuse 42 angeordnet ist und einer in der zweiten Werkstückspindel 34 vorgesehene Werkstückaufnahme 38 (Fig. 5) aufweist, wobei das zweite Werkstückspindelgehäuse 42 durch ein als Ganzes mit 40 bezeichnetes Schlittensystem beispielsweise sowohl in einer Z-Richtung parallel zur ersten Werkstückspindelachse 16 als auch in einer X-Richtung senkrecht zur ersten Werkstückspindelachse 16 bewegbar ist.

Zur Bearbeitung des Bearbeitungsbereichs BW des Werkstücks W ist ein als Ganzes mit 48 bezeichnetes Werkzeugträgersystem vorgesehen, welches einen Werkzeugrevolver 50 umfasst, der einen relativ zu einem Revolvergehäuse 54 um eine als Ganzes mit 56 bezeichnete Revolverachse drehbaren Revolverkopf 52 aufweist, wobei der Revolverkopf 52 mit einer Vielzahl von Werkzeugaufnahmen 58 versehen ist, in welche Werkzeughalter 60 mit in diesen aufgenommenen Werkzeugen 62, beispielsweise dargestellt in Fig. 2 bis 4, einsetzbar sind, wobei die Werkzeuge 62 entweder als angetriebene Werkzeuge oder als stationäre Werkzeuge ausgebildet sein können.

Zur Bewegung des als Werkzeugrevolvers 50 relativ zur Langdrehführungsbüchse 30 oder relativ zur zweiten Werkstückspindel 34 sitzt der Werkzeugrevolver 50 auf einem als Ganzes mit 70 bezeichneten Revolverbewegungssystem, welches ein Schlittensystem 72 umfasst, das seinerseits eine Bewegung des Werkzeugrevolvers 50 relativ zum Maschinengestell 12 längs einer parallel zur ersten Werkzeugspindelachse 16 verlaufenden Z-Achse, längs einer quer zur ersten Werkstückspindelachse 16 verlaufenden X-Achse und längs einer quer zur X-Achse und zur ersten Werkstückspindelachse 16 verlaufenden Y-Achse ermöglicht.

Es ist aber auch denkbar, das Schlittensystem 72 so auszubilden, dass dieses nur eine Bewegung in der X-Richtung und der Z-Richtung zulässt, und keine Bewegbarkeit in der Y-Richtung vorgesehen ist.

Das Schlittensystem 72 trägt dabei seinerseits ein in den genannten Richtungen X, Y und Z durch das Schlittensystem 72 bewegbares Drehpositioniersystem 74 des Revolverbewegungssystems 70, mit welchem der gesamte Werkzeugrevolver 50 um eine B-Achse relativ zum Maschinengestell 12 und auch relativ zum Schlittensystem 72 drehbar ist, wobei die B-Achse senkrecht zur X-Achse und Z-Achse und vorzugsweise parallel zu einer Y-Achse verläuft, soweit eine solche vorgesehen ist.

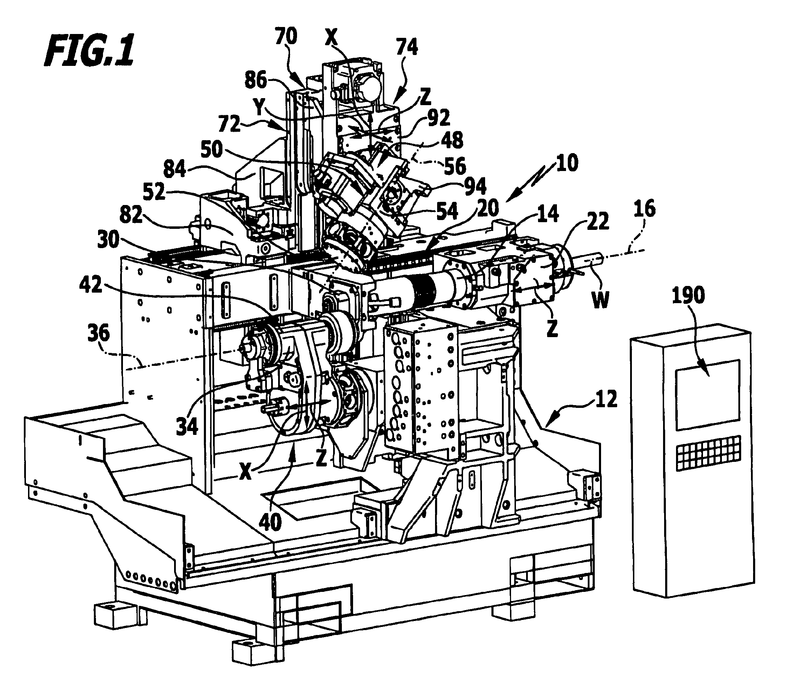

In Fig. 1 und 5 dargestellt, umfasst das Schlittensystem 72 beispielsweise einen Z-Schlitten 82, welcher relativ zum Maschinengestell 12 in der Z-Richtung bewegbar ist.

Auf diesem Z-Schlitten 82 sitzt ein als Ganzes mit 84 bezeichneter Y-Schlitten und auf dem Y-Schlitten sitzt ein als Ganzes mit 86 bezeichneter X-Schlitten, der relativ zum Y-Schlitten in der X-Richtung bewegbar ist.

Der X-Schlitten 86 umfasst dabei beispielsweise eine Drehbasis 92 des Drehpositioniersystems 74, an welcher ein Revolvergehäuseträger 94 um die B-Achse drehbar gelagert ist (Fig. 1, 6, 7).

Die Lagerung des Revolvergehäuseträgers 94 relativ zur Drehbasis 92 erfolgt dabei durch ein als Ganzes mit 100 bezeichnetes Übersetzungsgetriebe ins Langsame, welches mit einem Getriebegehäuse 102 an der Drehbasis 92 fixiert ist und einen um die B-Achse drehbaren Abtriebskörper 104 aufweist, an welchem der Revolvergehäuseträger 94 gehalten und somit relativ zum Getriebegehäuse 102 gelagert ist.

Ferner erfolgt ein Antrieb des Übersetzungsgetriebes 100 über eine Antriebswelle 106 des Übersetzungsgetriebes 100.

Die Antriebswelle 106 ist dabei durch einen mit der Drehbasis 92 verbundenen Drehantrieb 110 antreibbar, welcher beispielsweise einen Antriebsmotor 112 mit einer Abtriebswelle 114 umfasst sowie ein zwischen der Abtriebswelle 114 und der Antriebswelle 106 wirkendes Übertragungsgetriebe 120, das beispielsweise als Riemengetriebe ausgebildet ist und eine auf der Abtriebswelle 114 sitzende Riemenscheibe 122 sowie eine auf der Antriebswelle 106 sitzende Riemenscheibe 124 und einen auf beiden Riemenscheiben 122 und 124 laufenden Treibriemen 126 aufweist, wobei das Übertragungsgetriebe 120 vorzugsweise als Zahnriemengetriebe ausgebildet ist.

Vorzugsweise ist das Übersetzugsgetriebe 100 ein sogenanntes Zykloidgetriebe, welches einerseits spielfrei arbeitet und der Drehantrieb 110 ist vorzugsweise ein lagegeregelter Drehantrieb 110, mit welchem die Möglichkeit besteht, den Revolvergehäuseträger 94 stufenlos und drehlagegeregelt relativ zur Drehbasis 92 in beliebigen Drehstellungen zu positionieren.

Zur Erfassung der Drehstellungen des Revolvergehäuseträgers 94 relativ zur Drehbasis 92 ist ein Drehpositionserfassungssystem 130 vorgesehen, welches einerseits einen Drehpositionssensor 132 aufweist, der beispielsweise mit einem Gehäuse 134 fest am Revolvergehäuseträger 94, und zwar an einer der Drehbasis 92 abgewandten Seite derselben, sitzt und über eine Drehmesswelle 136, welche die als Hohlwelle ausgebildete Antriebswelle 106 durchsetzt, mit der Drehbasis 92 verbunden ist, wobei ein Ende 138 der Drehmesswelle 136 drehfest an der Drehbasis 92 fixiert ist. Damit besteht die Möglichkeit einer präzisen Messung der Drehstellung des Revolvergehäuseträgers 94 relativ zur Drehbasis 92, da die Messung der Drehstellung frei von sich antriebsnah im Revolvergehäuseträger 94 ausbildenden lastbedingten Deformationen erfolgt.

Somit erlaubt das Drehpositionserfassungssystem 130 eine exakte Erfassung der B-Achsen-Relativposition des Revolvergehäuseträgers 94 bezüglich der Drehbasis 92.

Das Drehpositioniersystem 74 umfasst somit das Übersetzungsgetriebe 100, den Drehantrieb 110 sowie das Drehpositionserfassungssystem 130.

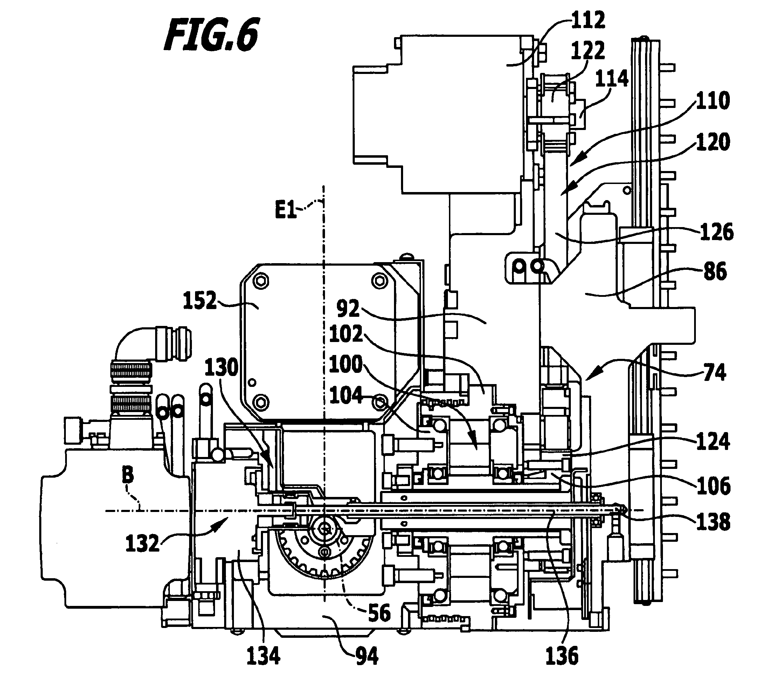

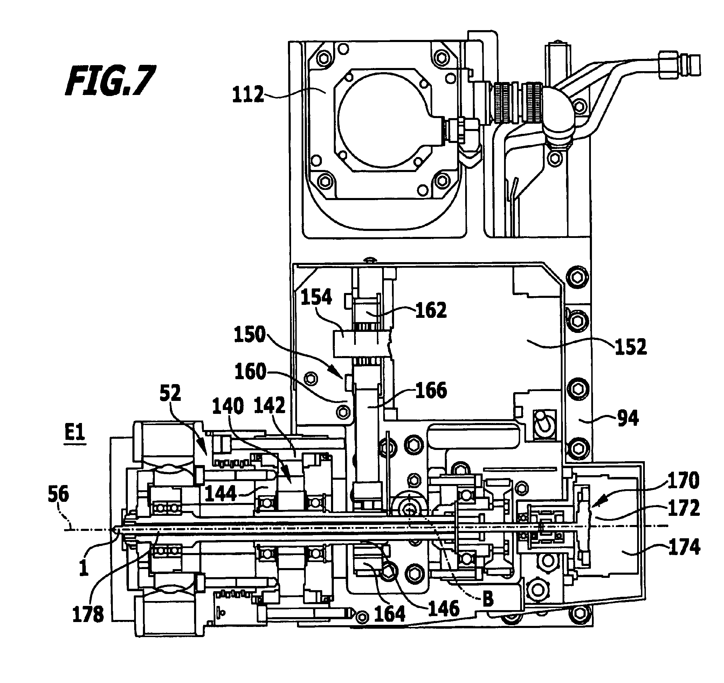

Wie in Fig. 6 und 7 dargestellt, verläuft die Revolverachse 56 in einer Ebene E1 (Zeichnungsebene von Fig. 7), welche senkrecht auf der B-Achse und somit senkrecht zu der Drehachse steht, um welche der Revolvergehäuseträger 94 relativ zur Drehbasis 92 stufenlos und lagegeregelt drehbar und durch die Lageregelung auch stufenlos festlegbar ist.

Der Revolverkopf 52 ist dabei seinerseits über ein als Ganzes mit 140 bezeichnetes Übersetzungsgetriebe ins Langsame an dem Revolvergehäuseträger 94 gelagert, wobei das Übersetzungsgetriebe 140 ein Getriebegehäuse 142 aufweist, das fest mit dem Revolvergehäuseträger 94 verbunden ist und einen Abtriebskörper 144 aufweist, der fest mit dem Revolverkopf 52 verbunden ist. Das Übersetzungsgetriebe 140 ist dabei durch eine Antriebswelle 146 antreibbar, welche koaxial zur Revolverachse 56 verläuft und sich über das Übersetzungsgetriebe 100 auf einer dem Revolverkopf 52 abgewandten Seite hinaus erstreckt.

Ein Antrieb des Übersetzungsgetriebes 140 erfolgt über einen als Ganzes mit 150 bezeichneten und am Revolvergehäuseträger 94 angeordneten Drehantrieb, welche einen Antriebsmotor 152 umfasst, dessen Abtriebswelle 154 durch ein als Ganzes mit 160 bezeichnetes Übertragungsgetriebe mit der Antriebswelle 146 gekoppelt ist, wobei das Übertragungsgetriebe 160 eine auf der Abtriebswelle 154 sitzende Riemenscheibe 162 und eine auf der Antriebswelle 146 sitzende Riemenscheibe 164 umfasst, die durch einen Treibriemen 166 miteinander gekoppelt sind. Vorzugsweise ist das Übertragungsgetriebe 160 in dem vorstehend dargestellten Ausführungsbeispiel als Zahnriemengetriebe ausgebildet.

Auch das Übersetzungsgetriebe 140 ist beispielsweise als Zyklo-Getriebe oder Zykloid-Getriebe ausgebildet, das einerseits eine große Übersetzung ins Langsame aufweist und durch den Drehantrieb 150 stufenlos und lagegeregelt antreibbar ist, so dass die Drehbewegungen um des Revolverkopfes 52 relativ zum Revolvergehäuse 54 um die Revolverachse 56 stufenlos und drehlagegeregelt relativ zum Revolvergehäuseträger 94 ausführbar sind.

Ferner ist zur Erfassung der Drehstellungen des Revolverkopfes 52 relativ zum Revolvergehäuseträger 94 noch ein Drehpositionserfassungssystem 170 vorgesehen, welches einen Drehpositionssensor 172 aufweist, dessen Gehäuse 174 fest am Revolvergehäuseträger 94 an einer der Revolverkopf 52 abgewandten Seite montiert ist, wobei der Drehpositionssensor 172 über eine Drehmesswelle 176 die Drehpositionen des Revolverkopfes 52 erfasst, und die Drehmesswelle 176 mit ihrem dem Drehpositionssensor 172 abgewandten Ende 178 drehfest mit dem Revolverkopf 52 verbunden ist. Die Drehmesswelle 176 erstreckt sich dabei koaxial zur Revolverachse 56 durch die als Hohlwelle ausgebildete Antriebswelle 146 des Übersetzungsgetriebes 140 hindurch und verläuft koaxial zur Revolverachse 56.

Damit ist das Drehpositionserfassungssystem 170 in der Lage, exakt die Drehstellungen des Revolverkopfes 52 relativ zum Revolvergehäuseträger 94 zu erfassen.

Das Übersetzungsgetriebe 140, der Drehantrieb 150 und das Drehpositionserfassungssystem 170 bilden ein Revolverdrehpositioniersystem 180, mit welchem der Revolverkopf 52 um die H-Achse stufenlos lagegeregelt drehbar und durch die Lageregelung auch stufenlos festlegbar ist.

Der Drehmaschine 10 ist eine als Ganzes mit 190 bezeichnete Steuerung zugeordnet, mit welcher die Bewegungen der ersten Werkstückspindel 14 und der zweiten Werkstückspindel 34 in der Z-Richtung bzw. in X-Richtung durch das Längsführungssystem 20 bzw. das Schlittensystem 40 sowie die Bewegungen des Revolverkopfes 52 in den Richtungen X, Y und Z, und die Drehbewegungen um die B-Achse B, ausgeführt durch das Revolverbewegungssystem 70 mit dem Schlittensystem 72 und dem Drehpositioniersystem 74, sowie die Drehbewegungen um die als H-Achse ausgebildete Revolverachse 56, ausgeführt durch das Revolverdrehpositioniersystem 180, steuerbar sind.

Insbesondere ist die Steuerung 190 in der Lage, die Drehbewegungen des Drehpositioniersystem 74 um die B-Achse stufenlos und lagegeregelt, insbesondere drehlagegeregelt, auszuführen sowie die Drehbewegungen des Revolverkopfes 52 um die H-Achse stufenlos und lagegeregelt, insbesondere drehlagegeregelt auszuführen, so dass die Werkzeuge 62 relativ zum Bearbeitungsbereich BW des Werkstücks beliebig ausgerichtet werden können. Wie beispielsweise in Fig. 2 dargestellt, lässt sich ein Werkzeug 62 einerseits exakt parallel zu einer durch die erste Werkstückspindelachse 16 verlaufenden Ebene E3 ausrichten, und zwar einerseits durch eine Bewegung in der X, Y und Z-Achse und andererseits durch eine Drehbewegung um die als H-Achse ausgebildete Revolverachse 56 und außerdem lässt sich dann durch eine Drehbewegung um die B-Achse der Winkel zwischen dem Werkzeug 62 und der ersten Werkstückspindelachse 16 stufenlose und beliebig frei exakt festlegen.

Damit lassen sich entweder beliebige gewölbte Flächen im Bearbeitungsbereich BW des Werkstücks erzeugen oder beliebig relativ zur ersten Werkstückspindelachse 16 verlaufende, beispielsweise diese schneidende oder auch nicht schneidende Bohrungen.

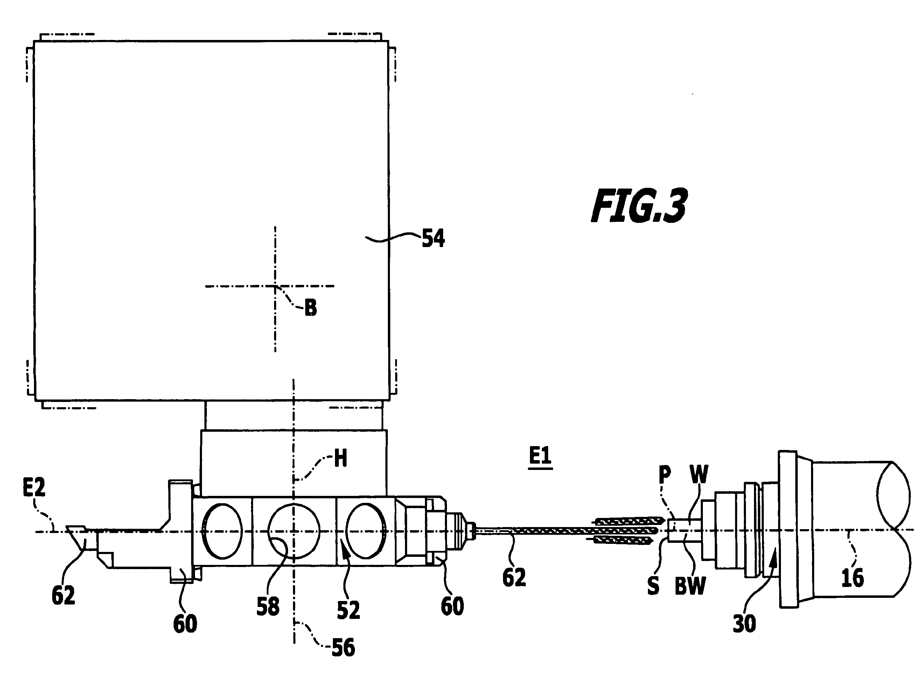

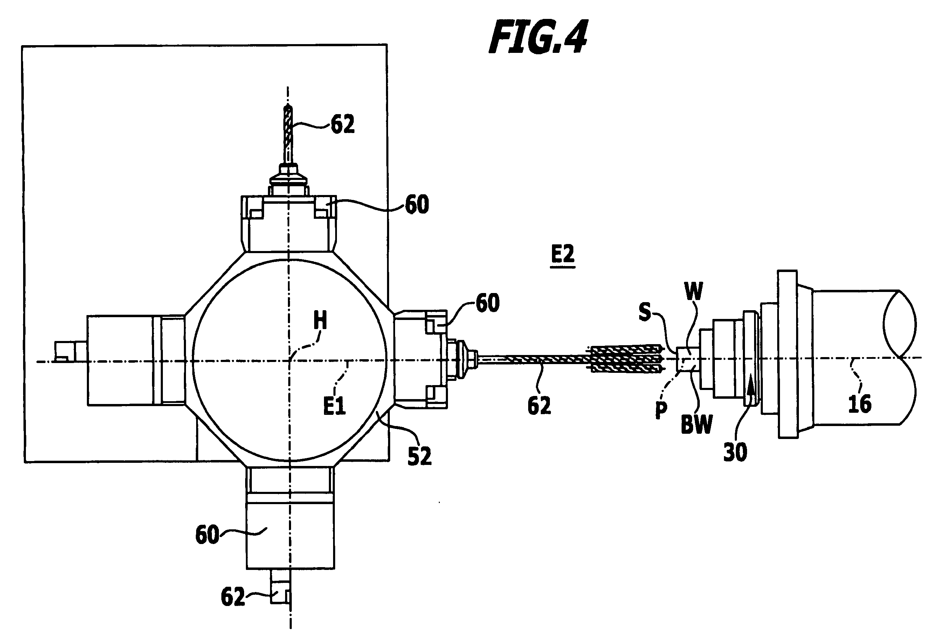

Wie in Fig. 3 und 4 dargestellt, eignet sich die erfindungsgemäße Drehmaschine insbesondere auch zum Ausführen von exakt parallel zur ersten Werkstückspindelachse 16 verlaufenden Bohrungen in dem Werkstück W, die beispielsweise ausgehend von einer Stirnseite S des Werkstücks W in diese eingebracht werden, wobei sich bei der erfindungsgemäßen Lösung einerseits durch Drehung des Revolverkopfes 52 um die H-Achse und andererseits durch Drehung des Revolvergehäuses 54 um die B-Achse das als Bohrer ausgebildete Werkzeug 62 exakt parallel zur ersten Werkstückspindelachse 16 ausrichten und auch beim Einbringen einer Tieflochbohrung in das Werkstück W exakt parallel ausgerichtet führen lässt.

Dabei sind hinsichtlich der Parallelität zur ersten Werkstückspindelachse 16 vorliegende Fehlausrichtungen des Werkzeugs 62 in vollem Umfang korrigierbar, da die H-Achse einerseits in einer zur B-Achse senkrechten Ebene E1 liegt und in dieser ersten Ebene E1 um die B-Achse herum bewegbar ist und andererseits sich das Werkzeug 62, welches ein Bohrwerkzeug darstellt, sich in einer zweiten Ausrichtebene E2 erstreckt, die senkrecht zur H-Achse H verläuft und in dieser zweiten Ausrichtebene E2 um die Revolverachse 56 schwenkbar ist, wobei die erste Ausrichtebene E1 und die zweite Ausrichtebene E2 senkrecht aufeinander stehen, so dass insgesamt das Bohrwerkzeug 62 relativ zu jeder parallelen P zur ersten Spindelachse 16 ausgerichtet werden kann.

Wie in Fig. 5 dargestellt, besteht außerdem die Möglichkeit, durch einen Werkzeughalter 60', welcher das Werkzeug 62' parallel zur H-Achse ausgerichtet hält, eine Bearbeitung an dem zweiten Werkstück W', das in der Werkzeugaufnahme 38 der zweiten Werkzeugspindel 34 gehalten ist, vorzunehmen, wobei auch in diesem Fall das Werkzeug 62' in unterschiedlichsten Richtungen relativ zur zweiten Werkstückspindelachse 36 ausgerichtet werden, in gleicher Weise wie im Zusammenhang mit einer Bearbeitung des Werkstücks W beschrieben.

## Patentansprüche

1. Drehmaschine umfassend
ein Maschinengestell (12),
eine am Maschinengestell (12) angeordnete Werkstückspindel (14, 34), mit welcher ein Werkstück (W, W') um eine Werkstückspindelachse (16, 36) drehbar ist,
eine Werkstückaufnahme (30, 38) für ein um die Werkstückspindelachse (16, 36) drehbares Werkstück (W, W'),
mindestens ein am Maschinengestell (12) angeordnetes Werkzeugträgersystem (48), das mit einem Werkzeugrevolver (50) zur Aufnahme einer Vielzahl von Werkzeugen (62, 62') versehen ist, wobei der Werkzeugrevolver (50) ein Revolvergehäuse (54) und einen relativ zu diesem um eine Revolverachse (56) drehbaren und die Werkzeuge (62, 62') tragenden Revolverkopf (52) umfasst,
mindestens ein Revolverbewegungssystem (70), durch welches das Revolvergehäuse (54) des Werkzeugrevolvers (50) und die Werkstückaufnahme (30, 38) mindestens in einer X-Richtung und einer Z-Richtung relativ zueinander bewegbar sind,
und eine Steuerung (190), mit welcher eine Bewegung der Werkstückaufnahme (30, 38) und des Revolvergehäuses (54) relativ zueinander steuerbar ist,
**dadurch gekennzeichnet, dass** das Revolverbewegungssystem (70) mit einem von der Steuerung (190) ansteuerbaren B-Achse (B) versehen ist, dass die Drehung um die B-Achse durch ein Drehpositioniersystem (74) stufenlos und lagegeregelt erfolgt, dass die Revolverachse (56) als in einer Ebene (E₁) senkrecht zur B-Achse (B) verlaufende von der Steuerung (190) ansteuerbare H-Achse (H) ausgebildet ist und dass der Revolverkopf (52) durch ein Revolverdrehpositioniersystem (180) stufenlos und lagegeregelt relativ zum Revolvergehäuse (54) um die H-Achse antreibbar und positionierbar ist.

2. Werkzeugmaschine nach Anspruch 1, **dadurch gekennzeichnet, dass** das Drehpositioniersystem (74) einen lagegeregelten Drehantrieb (110), der ein eine Übersetzung ins Langsame bewirkendes Übersetzungsgetriebe (100) antreibt, durch welches das Revolvergehäuse (54) drehbar ist.

3. Werkzeugmaschine nach Anspruch 2, **dadurch gekennzeichnet, dass** das Übersetzungsgetriebe (100) das Revolvergehäuse (54) am Revolverbewegungssystem (70) drehbar lagert.

4. Werkzeugmaschine nach einem der voranstehenden Ansprüche, **dadurch gekennzeichnet, dass** die Revolverachse (56) in einer senkrecht zur B-Achse (B) verlaufenden Ebene (E₁) liegt.

5. Werkzeugmaschine nach einem der voranstehenden Ansprüche, **dadurch gekennzeichnet, dass** das Revolverdrehpositioniersystem (180) einen lagegeregelten Drehantrieb (150) aufweist, der ein eine Übersetzung ins Langsame bewirkendes Übersetzungsgetriebe (140) antreibt, durch welches der Revolverkopf (52) um die Revolverachse (56) drehbar ist.

6. Werkzeugmaschine nach Anspruch 5, **dadurch gekennzeichnet, dass** das Übersetzungsgetriebe (140) den Revolverkopf (52) am Revolvergehäuse (54) drehbar lagert.

7. Werkzeugmaschine nach einem der Ansprüche 2 bis 6, **dadurch gekennzeichnet, dass** das Übersetzungsgetriebe (100, 140) ins Langsame ein Kurvengetriebe, insbesondere ein Zykloidgetriebe ist.

8. Werkzeugmaschine nach einem der voranstehenden Ansprüche, **dadurch gekennzeichnet, dass** die Revolverachse (56) in einem Abstand von der B-Achse (B) verläuft.

9. Werkzeugmaschine nach einem der voranstehenden Ansprüche, **dadurch gekennzeichnet, dass** ein Bewegungsraum für die Relativbewegung zwischen einem in Arbeitsstellung stehenden Werkzeug (62) und der Werkstückaufnahme (30) so gewählt ist, dass das Werkzeug (62) durch Drehung um die B-Achse (B) und um die H-Achse (H) in eine Stellung bewegbar ist, in welcher dieses mit der Werkstückspindelachse (16, 36) in allen durch diese hindurchverlaufenden Ebenen (E3) einen spitzen Winkel einschließen kann.

10. Werkzeugmaschine nach einem der voranstehenden Ansprüche, **dadurch gekennzeichnet, dass** der Bewegungsraum für die Relativbewegung zwischen einem in Arbeitsstellung stehenden Werkzeug (62) und der Werkstückaufnahme (30, 38) so gewählt ist, dass das Werkzeug (62) durch Drehung um die B-Achse (B) und um die H-Achse (H) exakt parallel zur Werkstückspindelachse (16, 36) ausrichtbar ist.

## Claims

1. Lathe comprising
a machine frame (12),
a workpiece spindle (14, 34) arranged on the machine frame (12), a workpiece (W, W') being rotatable about a workpiece spindle axis (16, 36) with said workpiece spindle,
a workpiece receptacle (30, 38) for a workpiece (W, W') rotatable about the workpiece spindle axis (16, 36),
at least one tool carrier system (48) arranged on the machine frame (12) and provided with a tool turret (50) for accommodating a plurality of tools (62, 62'), wherein the tool turret (50) comprises a turret housing (54) and a turret head (52) rotatable about a turret axis (56) relative to said turret housing and bearing the tools (62, 62'),
at least one turret movement system (70), the turret housing (54) of the tool turret (50) and the workpiece receptacle (30, 38) being movable relative to one another at least in an X direction and a Z direction by means of said turret movement system,
and a control (190), movement of the workpiece receptacle (30, 38) and the turret housing (54) relative to one another being controllable with said control,
**characterized in that** the turret movement system (70) is provided with a B axis (B) controllable by the control (190), that the rotation about the B axis is brought about by a rotary positioning system (74) in a step-less and position-controlled manner, that the turret axis (56) is designed as an H axis (H) extending in a plane (E₁) at right angles to the B axis (B) and controllable by the control (190) and that the turret head (52) is drivable and positionable about the H axis relative to the turret housing (54) by a turret rotary positioning system (180) in a step-less and position-controlled manner.

2. Machine tool as defined in claim 1, **characterized in that** the rotary positioning system (74) has a position-controlled rotary drive (110) driving a transmission gear (100) bringing about a transmission to slow, the turret housing (54) being rotatable by said transmission gear.

3. Machine tool as defined in claim 2, **characterized in that** the transmission gear (100) rotatably mounts the turret housing (54) on the turret movement system (70).

4. Machine tool as defined in any one of the preceding claims, **characterized in that** the turret axis (56) is located in a plane (E₁) extending at right angles to the B axis (B).

5. Machine tool as defined in any one of the preceding claims, **characterized in that** the turret rotary positioning system (180) has a position-controlled rotary drive (150) driving a transmission gear (140) bringing about a transmission to slow, the turret head (52) being rotatable about the turret axis (56) by means of said transmission gear.

6. Machine tool as defined in claim 5, **characterized in that** the transmission gear (140) rotatably mounts the turret head (52) on the turret housing (54).

7. Machine tool as defined in any one of claims 2 to 6, **characterized in that** the transmission gear (100, 140) to slow is a cam gear, in particular a cycloidal gear.

8. Machine tool as defined in any one of the preceding claims, **characterized in that** the turret axis (56) extends at a distance from the B axis (B).

9. Machine tool as defined in any one of the preceding claims, **characterized in that** a movement space for the relative movement between a tool (62) in operating position and the workpiece receptacle (30) is selected such that the tool (62) is movable into a position as a result of rotation about the B axis (B) and about the H axis (H), the tool being able to form an acute angle with the workpiece spindle axis (16, 36) in said position in all the planes (E3) extending through said workpiece spindle axis.

10. Machine tool as defined in any one of the preceding claims, **characterized in that** the movement space for the relative movement between a tool (62) in operating position and the workpiece receptacle (30, 38) is selected such that the tool (62) is adapted to be aligned exactly parallel to the workpiece spindle axis (16, 36) as a result of rotation about the B axis (B) and about the H axis (H).

## Revendications

1. Tour comprenant :
un bâti de machine (12) ;
une broche porte-pièce (14, 34) disposée sur le bâti de machine (12), avec laquelle une pièce (W, W') peut tourner autour d'un axe de broche porte-pièce (16, 36) ;
un porte-pièce (30, 38) pour une pièce (W, W') pouvant tourner autour de l'axe de broche porte-pièce (16, 36) ;
au moins un système porte-outil (48) disposé sur le bâti de machine (12), qui est muni d'une tourelle porte-outils (50) destinée à recevoir une multiplicité d'outils (62, 62'), dans lequel la tourelle porte-outils (50) comprend un boîtier de tourelle (54) et une tête rotative (52) pouvant tourner par rapport à celui-ci autour d'un axe de tourelle (56) et portant les outils (62, 62') ;
au moins un système de déplacement de tourelle (70), au moyen duquel le boîtier de tourelle (54) de la tourelle porte-outils (50) et le porte-pièce (30, 38) sont déplaçables l'un par rapport à l'autre au moins dans une direction X et une direction Z ;
et une commande (190), avec laquelle un déplacement du porte-pièce (30, 38) et du boîtier de tourelle (54) l'un par rapport à l'autre peut être commandé,
**caractérisé en ce que** le système de déplacement de tourelle (70) est doté d'un axe B (B) pouvant être commandé par la commande (190), **en ce que** la rotation autour de l'axe B est opérée au moyen d'un système de positionnement rotatif (74) en continu et avec régulation de position, **en ce que** l'axe de tourelle (56) se présente sous la forme d'un axe H (H) s'étendant dans un plan (E₁) perpendiculairement à l'axe B (B) et pouvant être commandé par la commande (190), et **en ce que** la tête rotative (52) peut être entraînée et positionnée autour de l'axe H, en continu et avec régulation de position par rapport au boîtier de tourelle (54) au moyen d'un système de positionnement rotatif de tourelle (180).

2. Machine-outil selon la revendication 1, **caractérisée en ce que** le système de positionnement rotatif (74) comprend un entraînement rotatif (110) à régulation de position, qui entraîne un réducteur (100) effectuant une démultiplication, au moyen duquel le boîtier de tourelle (54) peut tourner.

3. Machine-outil selon la revendication 2, **caractérisée en ce que** le réducteur (100) supporte le boîtier de tourelle (54) de façon rotative sur le système de déplacement de tourelle (70).

4. Machine-outil selon l'une quelconque des revendications précédentes, **caractérisée en ce que** l'axe de tourelle (56) est situé dans un plan (E₁) s'étendant perpendiculairement à l'axe B (B).

5. Machine-outil selon l'une quelconque des revendications précédentes, **caractérisée en ce que** le système de positionnement rotatif de tourelle (180) présente un entraînement rotatif à régulation de position (150), qui entraîne un réducteur (140) effectuant une démultiplication, au moyen duquel la tête de rotative (52) peut tourner autour de l'axe de tourelle (56).

6. Machine-outil selon la revendication 5, **caractérisée en ce que** le réducteur (140) supporte la tête rotative (52) de façon rotative sur le boîtier de tourelle (54).

7. Machine-outil selon l'une quelconque des revendications 2 à 6, **caractérisée en ce que** le réducteur (100, 140) de démultiplication est une commande à cames, en particulier un engrenage cycloïdal.

8. Machine-outil selon l'une quelconque des revendications précédentes, **caractérisée en ce que** l'axe de tourelle (56) est situé à une distance de l'axe B (B).

9. Machine-outil selon l'une quelconque des revendications précédentes, **caractérisée en ce que** l'espace de déplacement pour le déplacement relatif entre un outil (62) se trouvant en position de travail et le porte-pièce (30) est choisi de telle manière que l'outil (62) soit déplaçable, par rotation autour de l'axe B (B) et autour de l'axe H (H), dans une position dans laquelle celui-ci peut former un angle aigu avec l'axe de broche porte-pièce (16, 36) dans tous les plans (E₃) passant par celui-ci.

10. Machine-outil selon l'une quelconque des revendications précédentes, **caractérisée en ce que** l'espace de déplacement pour le déplacement relatif entre un outil (62) se trouvant en position de travail et le porte-pièce (30, 38) est choisi de telle manière que l'outil (62) puisse être amené en alignement exactement parallèle avec l'axe de broche porte-pièce (16, 36) par rotation autour de l'axe B (B) et autour de l'axe H (H).
